# EUROPÄISCHE PATENTSCHRIFT

(11) **EP 3 122 435 B1**
(45) Veröffentlichungstag und Bekanntmachung des Hinweises auf die Patenterteilung: **24.04.2019**
(21) Anmeldenummer: 15707900.5
(22) Anmeldetag: 25.02.2015
(51) Int. Cl.: B01D 35/00, B01D 35/30

(54) **FILTERKOPF AUS KUNSTSTOFF MIT METALLISCHEM GEWINDESTUTZENEINSATZ**
POLYMER FILTER SUPPORT WITH METAL SLEEVE
SUPPORT DE FILTRE EN POLYMERE AVEC MANCHON METALLIQUE

(30) Priorität: 24.03.2014 DE 102014205449
(43) Veröffentlichungstag der Anmeldung: 01.02.2017
(73) Patentinhaber: Mahle International GmbH, 70376 Stuttgart (DE)
(72) Erfinder: DUNSCH, Robert, 71665 Vaihingen (DE); HAALA, Lutz, 74182 Obersulm (DE)
(74) Vertreter: BRP Renaud & Partner mbB Rechtsanwälte Patentanwälte Steuerberater
(86) Internationale Anmeldenummer: PCT/EP2015/053940
(87) Internationale Veröffentlichungsnummer: WO 2015/144378

(56) Entgegenhaltungen:
- EP-A1- 2 233 189
- EP-A1- 2 368 615
- WO-A1-2012/168639
- DE-B3-102012 000 876
- DE-C1- 19 536 613

## Beschreibung

Die vorliegende Erfindung betrifft einen Filterkopf aus Kunststoff mit einem zumindest teilweise darin eingespritzten Gewindestutzeneinsatz gemäß dem Oberbegriff des Anspruchs 1 bekannt. Die Erfindung betrifft außerdem einen metallischen Gewindestutzeneinsatz.

Aus der WO 2012/168639 A1 ist ein gattungsgemäßer Filterkopf aus Kunststoff mit einem metallischen und darin eingegossenen Gewindestutzeneinsatz bekannt. Um die zur Abdichtung erforderlichen Kräfte aufnehmen zu können, weist der Gewindestutzeneinsatz radiale Arme auf, die in einem Ring münden und über den der Gewindestutzeneinsatz gegenüber dem aus Kunststoff ausgebildeten Filterkopf abgedichtet sind.

Bei sogenannten Spin-on Filtern ist im Kraftfahrzeug ein Aufnahmebauteil bzw. Befestigungsbauteil (Filterkopf) mit den jeweiligen Zu- und Abführkanälen vorgesehen. Dieser Filterkopf wird üblicherweise aus Metall gefertigt, da eine Herstellung aus Kunststoff Beständigkeitsprobleme, hervorgerufen beispielsweise durch das sogenannte Kriechen des Kunststoffs, zeigt. Sollen demzufolge Filterköpfe aus Kunststoff ausgebildet werden, muss ein vergleichsweise aufwändiger und teurer metallischer Gewindestutzeneinsatz in den Kunststoff eingepresst werden. Dieser Einsatz muss darüber hinaus aufwändig gedichtet werden und verteuert den gesamten Filterkopf. Aus dem Kraftstofffilterbereich sind auch Lösungen bekannt, bei welchen metallische Gewindestutzeneinsätze als Drehteil mit geringer Toleranz eingesetzt werden, wobei derartige gedrehte Gewindestutzeneinsätze zwar vergleichsweise teuer sind, standardmäßig jedoch einfach radial/radial gegenüber dem Kunststoffspritzgießwerkzeug abgedichtet werden können.

Die vorliegende Erfindung beschäftigt sich mit dem Problem, für einen Filterkopf der gattungsgemäßen Art eine verbesserte oder zumindest eine alternative Ausführungsform anzugeben, die insbesondere kostengünstiger und weniger kriechanfällig ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Filterkopf aus Kunststoff mit einem metallischen und als Kaltfließpressteil ausgebildeten Gewindestutzeneinsatz auszustatten. Dabei weist der Filterkopf radial verlaufende Kunststoffrippen auf, die strahlenförmig vom Gewindestutzeneinsatz ausgehen. Die Kunststoffrippen verlaufen dabei in radialer Richtung von innen vom Gewindestutzeneinsatz nach außen zu einer axialen Dichtfläche und münden in diese, bzw. gehen fluchtend in diese über. Sowohl die Kunststoffrippen als auch die Dichtfläche sind dabei integral am Filterkopf, das heißt aus Kunststoff, ausgebildet. Durch die vergleichsweise hochgezogenen Kunststoffrippen, die bis an die axiale Dichtfläche geführt sind, weisen diese eine deutlich erhöhte Steifigkeit im Vergleich zu bisher deutlich unterhalb der Dichtfläche endenden Kunststoffrippen auf. Hierdurch kann ein die Dichtwirkung beeinträchtigendes Kriechen erheblich reduziert werden. Zudem kann der als Kaltfließpressteil hergestellte Gewindestutzeneinsatz kostengünstig hergestellt werden. Die Kunststoffrippen sorgen darüber hinaus dafür, dass die Kräfte der montierten Filterkartusche, des sogenannten Spin-Ons, welche aufgebracht werden müssen, damit die axiale Dichtung dichtet, optimal zum Gewindestutzeneinsatz abgeführt werden können.

Bei einer vorteilhaften Weiterbildung des erfindungsgemäßen Filterkopfes gehen die Kunststoffrippen radial außen fluchtend in die axiale Dichtfläche über. Hierdurch kann ein besonders hohes und damit steifes Querschnittsprofil der Kunststoffrippen geschaffen werden, wodurch das Kriechen deutlich reduziert werden kann.

Dabei wird der erfindungsgemäße Gewindestutzeneinsatz zunächst in eine Spritzgießform eingelegt und anschließend mit dem Kunststoff des Filterkopfs umspritzt. Durch die erstmals erfindungsgemäß vorgesehene zumindest eine Radialschulter des Gewindestutzeneinsatzes, erfolgt während dem Einspritzen des Kunststoffs in das Kunststoffspritzgießwerkzeug ein Anpressen des Gewindestutzeneinsatzes mit seiner axialen Dichtfläche an die Wandung des Kunststoffspritzgießwerkzeugs, wodurch eine deutlich verbesserte Abdichtung erzielt werden kann, als dies bei bisher lediglich radial wirksamen Dichtungen überhaupt möglich war. Von besonderem Vorteil ist dabei darüber hinaus, dass aufgrund der verbesserten Dichtwirkung des erfindungsgemäßen Gewindestutzeneinsatzes im Kunststoffspritzgießwerkzeug eine höhere Toleranz für die Fertigungsgenauigkeit des Gewindestutzeneinsatzes in Kauf genommen werden kann, was bei bisherigen, lediglich radial im Kunststoffspritzgießwerkzeug abdichtenden Gewindestutzeneinsätzen nicht hinnehmbar war.

Die vorliegende Erfindung beruht weiter auf dem allgemeinen Gedanken, einen metallischen Gewindestutzeneinsatz zum zumindest teilweisen Eingießen in einen Filterkopf aus Kunststoff erstmals als kostengünstiges Kaltfließpressteil mit zumindest einer Radialschulter mit einer axialen Dichtfläche auszubilden. Durch diese Radialschulter wird der in ein Kunststoffspritzgießwerkzeug eingelegte Gewindestutzeneinsatz gegen die Wandung des Kunststoffspritzgießwerkzeugs gedrückt und dabei über die axiale Dichtfläche an der Radialschulter gegenüber dem Kunststoffspritzgießwerkzeug abgedichtet. Durch den erfindungsgemäßen Gewindestutzeneinsatz ist es somit erstmals möglich einen bisher lediglich radial/radial abgedichteten Gewindestutzeneinsatz nun erstmals mit einer axialen Dichtfläche an der Radialschulter auszustatten und dadurch in Axialrichtung allein durch den Druck des eingespritzten Kunststoffs gegenüber dem Kunststoffspritzgießwerkzeug abzudichten. Durch das Anpressen des erfindungsgemäßen Gewindestutzeneinsatzes über seine Radialschulter an die Wandung des Kunststoffspritzgießwerkzeugs ist es erstmals möglich, auch einen größere Toleranzen aufweisenden Gewindestutzeneinsatz in einem Kunststoffspritzgießwerkzeug zu verwenden und damit auf die bisher vergleichsweise teuren, da gedrehten Gewindestutzeneinsätze zu verzichten. Durch die axiale Dichtfläche an der Radialschulter ist es auch erstmals möglich, den Gewindestutzeneinsatz als Kaltfließpressteil auszubilden und damit vergleichsweise kostengünstig herzustellen. Im Vergleich zu dem aus der WO 2012/168639 A1 bekannten metallischen Gewindestutzeneinsatz, ist der erfindungsgemäße Gewindestutzeneinsatz auch deutlich leichter, was insbesondere im Kraftfahrzeugbau von großem Vorteil ist.

Zweckmäßig besitzt der Gewindestutzeneinsatz eine Verdrehsicherung, insbesondere eine Rändelung an einer Außenmantelfläche. Um ein Filterelement, insbesondere ein Ringfilterelement auf den Gewindestutzeneinsatz aufschrauben zu können, muss dieser ein entsprechendes Gegendrehmoment aufbringen können, was durch die erfindungsgemäße Verdrehsicherung gewährleistet wird. Diese Verdrehsicherung ändert die ursprünglich zylindrische und damit runde Außenkontur des Gewindestutzeneinsatzes in eine unrunde Außenkontur, beispielsweise durch radiale Vorsprünge, und ermöglicht dadurch ein Verzahnen des Gewindestutzeneinsatzes mit dem Kunststoff. Durch die erfindungsgemäß vorgesehene Verdrehsicherung kann ein besonders zuverlässiges und festes Fixieren des Gewindestutzeneinsatzes in dem aus Kunststoff gespritzten Filterkopf erreicht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Ansicht auf einen erfindungsgemäßen Gewindestutzeneinsatz,
- Fig. 2: eine Schnittdarstellung durch den Gewindestutzeneinsatz,
- Fig. 3: einen in einen erfindungsgemäßen Filterkopf eingegossenen Gewindestutzeneinsatz,
- Fig. 4: eine Schnittdarstellung durch den gemäß der Fig. 3 dargestellten Filterkopf.

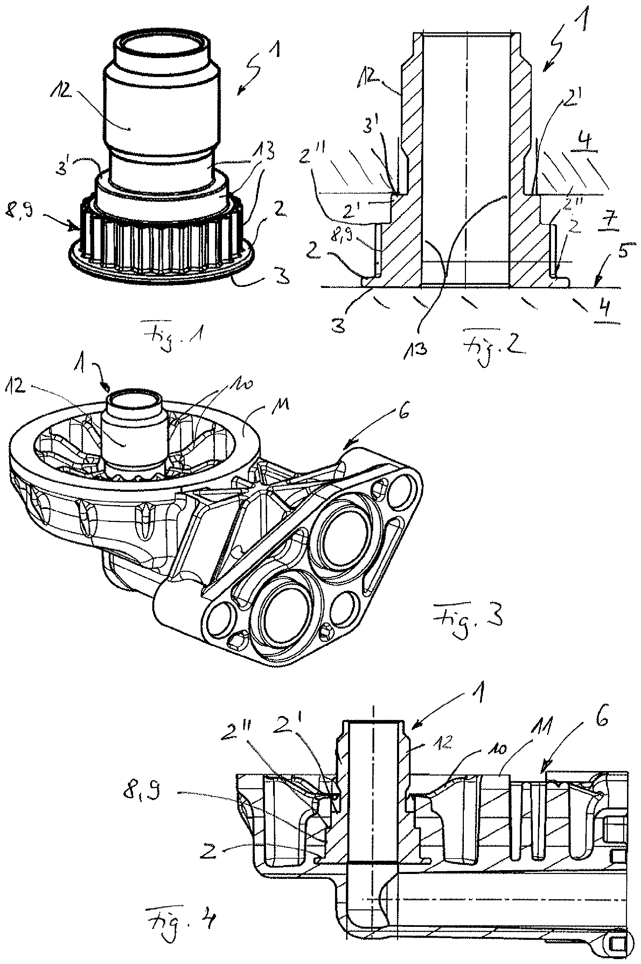

Entsprechend den Figuren 1 und 2, weist ein erfindungsgemäßer metallischer Gewindestutzeneinsatz 1 zumindest eine Radialschulter 2 mit einer axialen Dichtfläche 3 auf. Über diese axiale Dichtfläche 3 kann der Gewindestutzeneinsatz 1 in einem Kunststoffspritzgießwerkzeug 4 (vgl. Fig. 2) gegenüber einer Wand 5 des Spritzgießwerkzeugs 4 abgedichtet werden. In gleicher Weise ist auf der gegenüberliegenden Seite ebenfalls eine Radialschulter 2' mit einer axialen Dichtfläche 3' angeordnet, die ebenfalls eine Abdichtung gegenüber dem Kunststoffspritzgießwerkzeug 4 in rein axialer Richtung ermöglicht.
Im Unterschied zu bisherigen aus dem Stand der Technik bekannten Gewindestutzeneinsätzen ist es mit dem erfindungsgemäßen Gewindestutzeneinsatz 1 erstmals möglich, diesen in axialer Richtung gegenüber dem Kunststoffspritzgießwerkzeug 4, insbesondere über seine Radialschulter 2 mit seiner axialen Dichtfläche 3 abzudichten. Das Kunststoffspritzgießwerkzeug 4 dient dabei der Herstellung eines Filterkopfes 6 (ähnlich wie in Fig. 3 und 4) aus Kunststoff, in welchen der Gewindestutzeneinsatz 1 eingegossen ist. Beim Einspritzen des Kunststoffs in eine Kavität 7 des Kunststoffspritzgießwerkzeugs 4 bewirkt der unter Druck eingespritzte Kunststoff, dass der Gewindestutzeneinsatz 1 über seine Radialschulter 2 mit seiner axialen Dichtfläche 3 gegen die Wand 5 des Spritzgießwerkzeugs 4 gedrückt und dadurch abgedichtet wird. Durch das Vorsehen zumindest einer Radialschulter 2 und der damit wirksamen axialen Dichtfläche 3 ist es erstmals möglich, den Gewindestutzeneinsatz 1 als Kaltfließpressteil und damit vergleichsweise kostengünstig herzustellen. Bisher wurden Gewindestutzeneinsätze lediglich radial abgedichtet, was eine lediglich geringe Toleranz, d.h. eine hohe Fertigungsgenauigkeit des Gewindestutzeneinsatzes 1 erforderte. Durch die nunmehr erstmalig erreichte axiale Abdichtung können größere Toleranzen und damit größere Fertigungsungenauigkeiten des erfindungsgemäßen Gewindestutzeneinsatzes 1 hingenommen werden, sodass dieser als kostengünstiges Kaltfließpressteil ausgebildet werden kann.

Betrachtet man die Figuren 1 und 2 weiter, so kann man erkennen, dass der Gewindestutzeneinsatz 1 eine Verdrehsicherung 8, insbesondere eine Rändelung 9 an einer Außenmantelfläche aufweist. Über diese Rändelung 9, die vom Kunststoff im Kunststoffspritzgießwerkzeug 4 umschlossen wird, erfolgt ein Verzahnen des Gewindestutzeneinsatzes 1 im Kunststoff des Filterkopfes 6 und damit ein drehfestes Verankern desselben im Filterkopf 6.

Betrachtet man die Figur 2 weiter, so kann man erkennen, dass der erfindungsgemäße Gewindestutzeneinsatz 1 insgesamt 3 radial gestufte Radialschultern 2, 2' und 2" aufweist, wobei zwischen der Radialstufe 2 und der Radialstufe 2" die Verdrehsicherung 8 angeordnet ist.

Gemäß den Figuren 3 und 4 ist ein in einem Kunststoffspritzgießwerkzeug gespritzter erfindungsgemäßer Filterkopf 6 gezeigt, welcher radial verlaufende Kunststoffrippen 10 aufweist, die strahlenförmig vom Gewindestutzeneinsatz 1 ausgehen. Außen münden sie in eine axiale Dichtfläche 11, welche gegen ein nicht gezeigtes Filterelement in dichtender Weise gepresst wird. Die Kunststoffrippen 10 dienen als Verstärkungsrippen und verhindern bzw. reduzieren zumindest ein Kriechen des Kunststoffs während des Betriebs einer mit einem derartigen Filterkopf 6 ausgestatteten Filtereinrichtung, beispielsweise einem Ölfilter. Über ein am Gewindestutzeneinsatz 1 angeordnetes Außengewinde 12 kann das Ringfilterelement aufgeschraubt werden.

Die Kunststoffrippen 10 verlaufen dabei vorzugsweise nicht nur in radialer Richtung von innen vom Gewindestutzeneinsatz 1 nach außen zur axialen Dichtfläche 11 und münden in diese, sondern gehen sogar fluchtend in diese über. Hierdurch kann ein besonders hohes und damit steifes Querschnittsprofil der Kunststoffrippen 10 geschaffen werden, wodurch das Kriechen deutlich reduziert werden kann.
Sowohl die Kunststoffrippen 10 als auch die Dichtfläche 11 sind dabei integral am Filterkopf, das heißt einstückig mit diesem aus Kunststoff ausgebildet. Durch die vergleichsweise hochgezogenen Kunststoffrippen 10, die bis an die axiale Dichtfläche 11 geführt sind, weisen diese somit eine deutlich erhöhte Steifigkeit im Vergleich zu bisher deutlich unterhalb der Dichtfläche 11 endenden Kunststoffrippen auf. Hierdurch kann das die Dichtwirkung beeinträchtigende Kriechen erheblich reduziert werden. Die Kunststoffrippen 10 sorgen darüber hinaus dafür, dass die Kräfte der montierten Filterkartusche, des sogenannten Spin-Ons, welche aufgebracht werden müssen, damit die axiale Dichtung dichtet, optimal zum Gewindestutzeneinsatz 1 abgeführt werden können.

Mit dem erfindungsgemäßen Gewindestutzeneinsatz 1 ist es erstmals möglich, diesen axial gegenüber dem Kunststoffspritzgießwerkzeug 4 abzudichten, wodurch höhere Toleranzen in Kauf genommen werden, als bei einer rein radialen Abdichtung, wodurch es wiederum möglich ist, den Gewindestutzeneinsatz 1 als metallisches Kaltfließpressteil und damit kostengünstig auszubilden. Insbesondere kann hierdurch auch der Einsatz von gedrehten und vergleichsweise teuren Gewindestutzeneinsätzen vermieden werden.

Selbstverständlich ist dabei klar, dass neben den axialen Dichtflächen 3, 3' auch radiale Dichtflächen 13 vorgesehen sind. Diese radialen Dichtflächen 13 ermöglichen es zusammen mit den axialen Dichtflächen 3, 3' den Gewindestutzeneinsatz 1 axial und radial abzudichten und mit höherer Genauigkeit zu umspritzen.

Die radialen Dichtflächen können dabei im Inneren des Gewindestutzens 1 liegen, aber zugleich auch im Bereich der Verdrehsicherung 8 bzw. der Rändelung 9. Auch an der Außenmantelfläche des Gewindestutzeneinsatzes 1 zwischen der Verdrehsicherung 8 und der axialen Dichtfläche 3' bzw. zwischen der axialen Dichtfläche 3' und dem Außengewinde 12 ist eine radiale Dichtfläche 13 vorgesehen.

## Patentansprüche

1. Filterkopf (6) aus Kunststoff mit einem zumindest teilweise darin eingespritzten metallischen Gewindestutzeneinsatz (1), der als Kaltfließpressteil ausgebildet ist, wobei der Filterkopf (6) einstückig mit diesem ausgebildete, radial verlaufen Kunststoffrippen (10) aufweist, die strahlenförmig vom Gewindestutzeneinsatz (1) ausgehen und die radial außen in eine einstückig mit dem Filterkopf (6) ausgebildete axiale Dichtfläche (11) desselben münden.

2. Filterkopf nach Anspruch 1,
**dadurch gekennzeichnet,**
**dass** die Kunststoffrippen (10) radial außen fluchtend in die axiale Dichtfläche (11) übergehen.

3. Filterkopf nach Anspruch 1 oder 2,
**dadurch gekennzeichnet,**
**dass** die Kunststoffrippen (10) zum Gewindestutzeneinsatz (1) hin abfallen.

## Claims

1. Filter head (6) made of plastic, having a metal threaded nozzle insert (1) injected at least partially into it, which is designed as a cold-extruded part, wherein the filter head (6) has radially running plastic ribs (10) which are integrally formed with the filter head, extend from the threaded metal nozzle insert (1) in a radial manner, and lead radially outwards into an axial filter head sealing surface (11) integrally formed with the filter head (6).

2. Filter head according to claim 1,
**characterised in that**
the plastic ribs (10) merge radially on the outside with the axial sealing surface (11).

3. Filter head according to claim 1 or 2,
**characterised in that**
the plastic ribs (10) fall off towards the threaded nozzle insert (1).

## Revendications

1. Tête de filtre (6) en matière plastique comportant au moins un raccord métallique fileté rapporté (1) injecté en partie dans celle-ci qui est réalisé sous la forme d'une pièce extrudée à froid, dans laquelle la tête de filtre (6) présente des nervures en matière plastique (10) s'étendant radialement, réalisées avec celle-ci, lesquelles partent en forme de rayons depuis le raccord fileté rapporté (1) et débouchent radialement vers l'extérieur dans une surface d'étanchéité axiale (11) de celle-ci réalisée d'un seul tenant avec la tête de filtre (6).

2. Tête de filtre selon la revendication 1,
**caractérisée en ce que**
les nervures en matière plastique (10) passent radialement vers l'extérieur de façon coïncidente dans la surface d'étanchéité axiale (11).

3. Tête de filtre selon la revendication 1 ou 2,
**caractérisée en ce que**
les nervures en matière plastique (10) descendent vers le raccord métallique fileté rapporté (1).
